# FASCICULE DE BREVET EUROPEEN

(11) **EP 3 152 343 B1**
(45) Date de publication et mention de la délivrance du brevet: **21.03.2018**
(21) Numéro de dépôt: 15736539.6
(22) Date de dépôt: 05.06.2015
(51) Int. Cl.: C23C 4/08, C23C 4/18, F02C 7/32

(54) **PROCEDE DE MAINTENANCE D'ELEMENT DE CARTER DE BOITIER D'ACCESSOIRES DE TURBOMACHINE**
VERFAHREN ZUR INSTANDHALTUNG EINES HILFSANTRIEBSGEHÄUSEELEMENTS EINER TURBOMASCHINE
PROCESS FOR MAINTAINING A TURBOMACHINE ACCESSORY GEARBOX HOUSING ELEMENT

(30) Priorité: 05.06.2014 FR 1455134
(43) Date de publication de la demande: 12.04.2017
(73) Titulaire: Safran Transmission Systems, 92700 Colombes (FR)
(72) Inventeur: MEUNIER, Philippe, F-95240 Cormeilles en Parisis (FR); HENRY, Laurent, F-60680 Grandfresnoy (FR); HUSTACHE, Frédérique, F-77400 Saint Thibaud des Vignes (FR)
(74) Mandataire: Regimbeau
(86) Numéro de dépôt international: PCT/FR2015/051502
(87) Numéro de publication internationale: WO 2015/185877

(56) Documents cités:
- WO-A1-97/16577
- US-A- 2 588 421

## Description

### DOMAINE DE L'INVENTION

Le domaine de l'invention est celui de la maintenance de pièces de fonderie en magnésium, en particulier des carters et couvercles de carters de boitiers accessoires de turbomachines.

### ETAT DE LA TECHNIQUE

Les boitiers accessoires (également appelés relais d'accessoires) de turbomachines comprennent plusieurs trains de pignons permettant d'entrainer différents équipements accessoires de l'aéronef dans lequel est placée la turbomachine.

Chaque train de pignon vient se loger dans une cage de roulement, elle-même montée sur une surface cylindrique d'un carter de boitier, et d'un couvercle monté sur le carter.

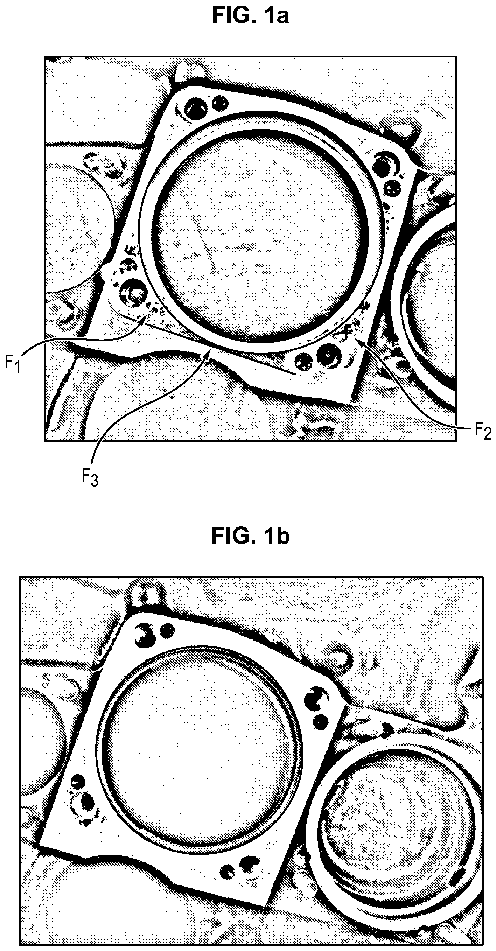

En fonctionnement, les rotations des pignons entrainent une usure par « fretting » (également appelé usure de contact) des surfaces du carter et du couvercle sur lesquelles ils sont montés, qui se caractérise par un creusement irrégulier en face et en diamètre de la surface cylindrique de montage. Sur la figure 1a, on a montré l'usure d'un support de cage de roulement d'un carter de boitier d'accessoires. On observe un fretting de surface de la pièce à l'extrémité de la flèche F1, et des cratères de corrosion indiqués par la flèche F2.

Ces dégradations perturbent l'utilisation des trains de pignons et limitent de façon importante la durée de vie des boitiers accessoires, il est donc nécessaire de réparer les carters et les couvercles.

Les réparations actuelles comprennent la mise en place d'une bague en lieu et place des surfaces cylindriques usées pour porter les cages de roulement et les trains de pignons.

Pour ce faire, les surfaces dégradées des carters et couvercles sont usinées pour supprimer les déformations de fretting (en particulier pour rétablir le caractère cylindrique car le fretting induit une déformation ovale en section sur la surface) et pour permettre l'insertion de la bague. L'usinage est ainsi réalisé sur une épaisseur pouvant atteindre 3 mm en rayon.

Sur la figure 1b, on a représenté un support de cage de roulement usiné pour recevoir une bague. A côté, un autre support de cage de roulement a été réparé par mise en place d'une bague.

Pour sa fixation sur le carter ou le couvercle, la bague est collée sur la surface usinée.

Ce type de réparation est problématique puisqu'il n'est pas pérenne. En effet, la bague mise en place lors de la réparation s'use également lors du fonctionnement des trains de pignons. Or, lors de la réparation suivante, il faut retirer la bague, mais aussi la colle solidifiée, ce qui implique d'usiner une épaisseur supplémentaire de la pièce initiale, pour repositionner une nouvelle bague.

La réduction progressive de l'épaisseur de la pièce à force d'usinage est telle que ce type de réparation ne peut être fait que deux fois dans la vie de la pièce, ce qui est incompatible avec une utilisation prolongée des boitiers d'accessoires. Ainsi par exemple, la pièce illustrée sur la figure 1a ne peut plus être réparée car on constate, à l'extrémité de la flèche F3, que la côte de surfaçage minimale de la pièce a été atteinte par les précédentes réparations.

De plus, ce mode de réparation ne permet pas de renforcer le carter ou le couvercle de boitier, puisque la bague qui est utilisée est réalisée dans le même métal que le substrat de base, c'est-à-dire un alliage à base de magnésium. Par conséquent, après réparation, la bague s'use aussi rapidement que le substrat.

Il existe donc un besoin pour réparer les carters et couvercles de boitiers d'accessoires de façon plus pérenne, en renforçant au court de cette réparation le carter le boitier concerné.

### PRESENTATION DE L'INVENTION

L'invention a pour objet de proposer un procédé de réparation de carters et couvercles de boitiers d'accessoires permettant de les renforcer et d'allonger leur durée de vie.

A cet égard, l'invention a pour objet un procédé de maintenance d'une pièce de fonderie en alliage de magnésium, ladite pièce étant un carter de boitier d'accessoires de turbomachine ou un couvercle de carter, comprenant au moins une surface cylindrique apte à recevoir une cage de roulement, le procédé étant caractérisé en ce qu'il comprend une étape consistant à réaliser un dépôt de molybdène sur la surface de la pièce par projection plasmatique. Le document WO 97/1677 A1 décrit certes un procédé de dépôt par projection thermique d'un revêtement d'un alliage molybdène-acier sur un substrat en alliage de magnésium ou d'aluminium, mais dans le but d'obtenir une surface de glissement.

Avantageusement, mais facultativement, le procédé de maintenance selon l'invention peut en outre comprendre au moins l'une des caractéristiques suivantes : la pièce comprend une bague rapportée en alliage de magnésium, ladite bague comprenant une surface cylindrique apte à recevoir une cage de roulement, et la quantité de molybdène est déposée sur une surface de ladite bague. Le procédé comprend en outre une étape préliminaire d'usinage de la surface de dépôt pour enlever une épaisseur de matière comprise entre 0 et 0,3 mm.

Le procédé comprend le dépôt d'une épaisseur comprise entre 0,3 et 0,7 mm de molybdène.
Le procédé comprend en outre une étape d'usinage postérieure au dépôt pour retirer le surplus de molybdène de la pièce.
L'alliage de magnésium est le magnésium ZRE1 ou le magnésium GA6Z1.
le molybdène déposé est pur à au moins 99%, de préférence à au moins 99,6%.

L'invention a également pour objet une pièce de fonderie en alliage de magnésium, caractérisée en ce qu'elle comprend sur une surface au moins une zone recouverte d'un revêtement de molybdène, la pièce ayant été rechargée par la mise en oeuvre du procédé de maintenance présenté ci-avant.

L'invention a aussi pour objet un boitier d'accessoires de turbomachine, comprenant un carter et un couvercle, le carter et/ou le couvercle étant en alliage de magnésium et ayant été rechargé(s) selon le procédé de maintenance présenté ci-avant.

Le rechargement des carters et couvercles par un dépôt de molybdène présente de nombreux avantage. En premier lieu ce procédé ne nécessite pas de creuser une épaisseur importante dans la pièce pour positionner une bague. Au contraire, l'usinage pour préparer la surface au dépôt est limité à l'usinage nécessaire pour supprimer les traces de fretting. Ceci permet de réitérer le procédé au moins sept fois sur la pièce avant de ne plus pouvoir l'usiner.

En outre, la pièce obtenue présente une dureté supérieure à la pièce initiale, et donc une usure moindre. Les réparations peuvent donc être davantage espacées dans le temps, ce qui accroit encore la durée de vie de la pièce ainsi rechargée.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :
- Les figures 1a et 1b, déjà décrites, représentent respectivement un élément de carter usé par fretting et sa réparation par fixation d'une bague,
- Les figures 2a et 2b représentent un carter de boitier d'accessoires et un couvercle de carter,
- La figure 3a représente un élément de carter réparé par le procédé de maintenance selon un mode de réalisation de l'invention,
- La figure 3b représente une vue en coupe d'un élément de carter réparé par le procédé de maintenance, au niveau de l'interface entre le substrat en alliage de magnésium et le dépôt de molybdène.
- La figure 4a représente schématiquement les principales étapes du procédé de maintenance,
- La figure 4b représente schématiquement la mise en oeuvre de l'étape de dépôt de molybdène.

### DESCRIPTION DETAILLEE D'AU MOINS UN MODE DE REALISATION DE L'INVENTION

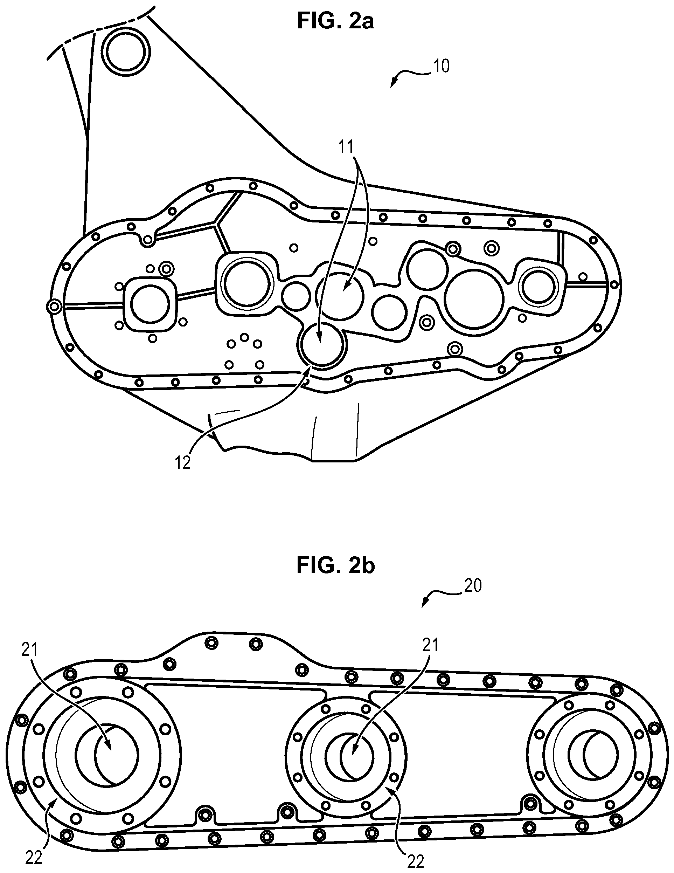

En référence à la figure 2a, on a représenté un exemple de carter 10 de boitier d'accessoires de turbomachine. Ce carter loge une pluralité de trains de pignons (non représentés) dédiés à l'entrainement d'accessoires d'un aéronef dans lequel est placé le boitier d'accessoires.

A cet égard, le carter comporte une pluralité de logements adaptés 11 pour recevoir une cage de roulement d'un train de pignon. Chaque logement comprend une surface cylindrique 12 apte à recevoir ladite cage. Comme indiqué ci-avant, cette surface est usée par fretting lors du fonctionnement prolongé des trains de pignons.

De manière analogue, la figure 2b représente un couvercle de boitier d'accessoires 20, adapté pour être rapporté sur le carter 10 afin de fermer celui-ci. Le couvercle 20 comprend également une pluralité de logements 21 comprenant chacun une surface cylindrique 22 apte à recevoir une cage de roulement d'un train de roulement. Ces surfaces sont également soumises à l'usure par fretting lors du fonctionnement des trains de pignons.

Le boitier d'accessoires comprend un carter et un couvercle, le couvercle étant monté sur le carter de manière à aligner les logements respectifs du carter et du couvercle.

Le carter et le couvercle sont des pièces de fonderie en alliage de magnésium. Avantageusement, l'alliage de magnésium utilisé fondre ces pièces est l'alliage ZRE1, comprenant de 2 à 3% en masse de zinc, de 2,5 à 4% en masse de terres rares, de 0,4 à 1% en masse de zirconium, et le reste de magnésium.

Ainsi les surfaces cylindriques de réception des cages de roulement peuvent être formées dans cet alliage de magnésium ZRE1.

Alternativement, le carter ou le couvercle peut avoir été préalablement traité par baguage conformément au procédé de l'art antérieur exposé ci-avant. Dans ce cas, la bague 30 est montée dans un logement 11, 21 du carter ou du couvercle. La bague comprend une surface cylindrique 32 formant une nouvelle surface de support d'une cage de roulement.

Cette bague 30 peut être réalisée en un autre alliage de magnésium que l'alliage ZRE1, avantageusement l'alliage AZ61A, qui comprend entre 5,8 et 7,2% en masse d'aluminium, 0,15% en masse de manganèse, de 0,4 à 1,5% en masse de zinc, jusqu'à 0,05% en masse de cuivre, jusqu'à 0,05% en masse de nickel, jusqu'à 0,05% en masse de silicium, et jusqu'à 0,3% en masse d'autres éléments, le reste étant du magnésium.

Le procédé proposé s'applique à la fois sur les surfaces cylindriques 12, 22 de réception de cages de roulement des pièces de fonderie obtenues initialement, soit sur la surface 32 des bagues rapportées sur ces pièces. Par conséquent, les surfaces cylindriques traitées par le procédé peuvent être en alliage ZRE1 ou en alliage AZ61A.

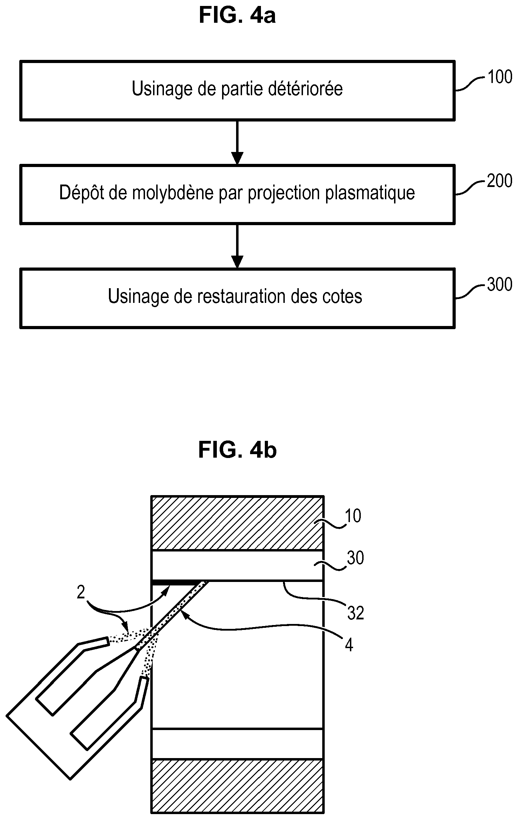

En référence à la figure 4a, on a représenté les principales étapes d'un procédé de maintenance d'un carter de boitier d'accessoires ou d'un couvercle de boitier. Ce procédé est mis en oeuvre avantageusement pour réparer une surface 12, 22, 32 de la pièce abîmée par fretting, c'est-à-dire avantageusement une surface cylindrique de réception d'une cage de roulement.

Ce procédé comprend une première étape 100 d'usinage d'une surface de réception 12, 22, 32 de cage de roulement dégradée par fretting, pour faire disparaître les effets du fretting, c'est-à-dire pour restaurer la régularité et le caractère cylindrique de la pièce. Cet usinage vient retirer une épaisseur de matière comprise entre 0 et 0,3 mm. L'épaisseur d'usinage n'est pas identique sur toute la circonférence de la surface, puisqu'elle dépend de la déformation initiale de la pièce.

Puis le procédé comprend une étape 200 de rechargement de la pièce, par un dépôt, sur la surface 12, 22, 32 usinée, de molybdène 2 par projection plasmatique. Cette étape 200 est représentée schématiquement sur la figure 4b dans l'exemple non limitatif de la maintenance d'un carter déjà préalablement réparé par la pose d'une bague 30.

Pour ce faire, on génère un arc plasma 4 à partir d'un gaz plasmagène, par exemple un mélange de propane et d'oxygène, à une tension de 15 kV , qui est utilisé pour projeter de la poudre de molybdène 2 sur la surface 12, 22, 32 à recharger. Au contact de l'arc plasma la poudre fond et crée sur la surface un revêtement uniforme qui solidifie en refroidissant.

Le molybdène déposé est avantageusement pur, c'est-à-dire que le matériau déposé comprend au moins 99%, et de préférence au moins 99,6% de molybdène.

La distance de projection est comprise entre 40 et 50 cm, avantageusement égale à 45 cm. La pièce est fixée et centrée au niveau de la surface cylindrique 12, 22, 32 à recharger sur un plateau tournant mu en rotation par un moteur. Des refroidisseurs positionnés en périphérie de la pièce assurent que sa température est constante et proche de la température ambiante pour éviter les déformations de la pièce ou les altérations de ses caractéristiques mécaniques.

La quantité de molybdène déposée doit être suffisante pour restaurer la côte initiale de la pièce de réception des cages de roulement, c'est-à-dire qu'elle doit au moins compenser l'usinage réalisé à l'étape 100, et l'usure de la pièce. Avantageusement, au cours de cette étape 200, une épaisseur de molybdène déposée est comprise entre 0,3 et 0,7 mm, et de préférence égale à 0,5 mm.

Le procédé comprend enfin une nouvelle étape 300 d'usinage de la pièce pour retirer le surplus de molybdène déposé et conférer à la pièce ainsi rechargée ses côtes initiales pour permettre d'y repositionner une cage de roulement. Cet usinage est donc réalisé sur une épaisseur qui peut être variable, en fonction de l'épaisseur de dépôt de molybdène. Il est cependant inférieur de préférence à 0,3 mm en rayon.

Le dépôt final sur la pièce présente une épaisseur de l'ordre de 0,2 mm.

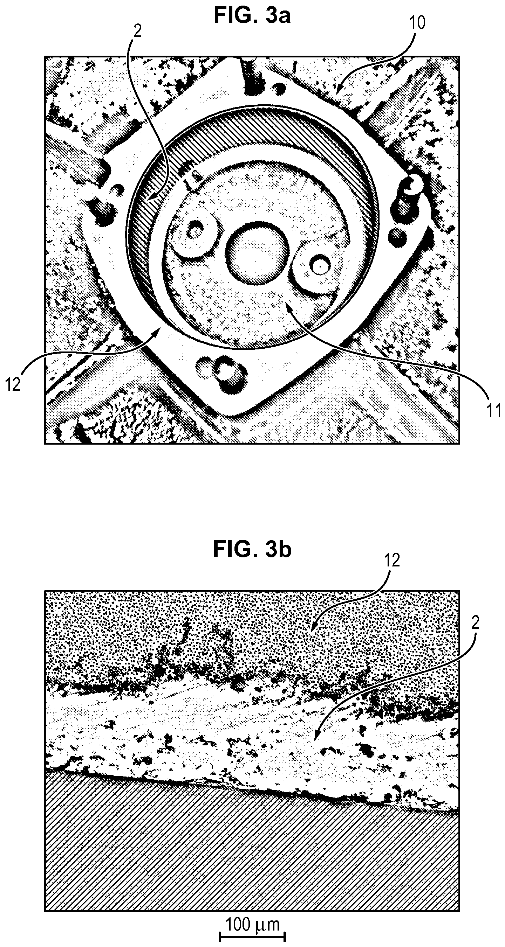

On a représenté en figure 3a une pièce 10 rechargée par le procédé décrit précédemment. Elle comprend le logement 11 comprenant la surface cylindrique de dépôt de molybdène, et le dépôt 2 sur ladite surface. Ce procédé est très avantageux, puisqu'il peut être reconduit au moins 8 voire 10 fois sur la pièce, contrairement au procédé de l'art antérieur qui ne pouvait être reconduit que deux fois.

En particulier, ce procédé peut être mis en oeuvre sur une pièce déjà réparée par ajout d'une bague, et alors il ne nécessite pas le retrait de la bague et l'usinage supplémentaire pour retirer la colle solidifiée, mais un usinage limité en épaisseur.

En outre, des tests réalisés sur les pièces ainsi rechargées montrent une nette amélioration de leur dureté ; en effet, l'alliage de magnésium ZRE1 dans laquelle est réalisée le couvercle ou le carter de base présente une dureté d'environ 48HB, tandis que le molybdène déposé sur cet alliage présente une dureté de 132 HB.

La pièce rechargée produit également un résultat conforme lors d'un contrôle par ressuage de niveau S4.

Enfin sur la figure 3b est représentée, grossie 200 fois au microscope, l'interface entre le dépôt 2 de molybdène et le substrat 12 en alliage de magnésium. On observe une bonne cohésion moléculaire à cet endroit entre le dépôt de molybdène et le substrat en magnésium. Cette coupe permet de constater la qualité du dépôt (absence d'inclusions ou de fissuration) et l'accroche de ce dernier (aucune délamination apparente en grossissement x200).

## Revendications

1. Procédé de maintenance d'une pièce de fonderie (10, 20) en alliage de magnésium, ladite pièce étant un carter (10) de boitier d'accessoires de turbomachine ou un couvercle de carter (20), comprenant au moins une surface cylindrique (12, 22, 32) apte à recevoir une cage de roulement, le procédé étant **caractérisé en ce qu'**il comprend une étape (200) consistant à réaliser un dépôt de molybdène (2) sur la surface (12, 22,32) de la pièce par projection plasmatique.

2. Procédé de maintenance selon la revendication 1, dans lequel la pièce (10, 20) comprend une bague (30) rapportée en alliage de magnésium, ladite bague comprenant une surface cylindrique (32) apte à recevoir une cage de roulement, et la quantité de molybdène (2) est déposée sur une surface (32) de ladite bague.

3. Procédé de maintenance selon l'une des revendications 1 ou 2, comprenant en outre une étape préliminaire (100) d'usinage de la surface de dépôt (12, 22, 32) pour enlever une épaisseur de matière comprise entre 0 et 0,3 mm.

4. Procédé de maintenance selon l'une des revendications 1 à 3, comprenant le dépôt d'une épaisseur comprise entre 0,3 et 0,7 mm de molybdène (2).

5. Procédé de maintenance selon l'une des revendications 1 à 4, comprenant en outre une étape d'usinage (300) postérieure au dépôt pour retirer le surplus de molybdène de la pièce.

6. Procédé de maintenance selon l'une des revendications précédentes, dans lequel l'alliage de magnésium est le magnésium ZRE1 ou le magnésium GA6Z1.

7. Procédé de maintenance selon l'une des revendications précédentes, dans lequel le molybdène (2) déposé est pur à au moins 99%, de préférence à au moins 99,6%.

8. Pièce de fonderie (10, 20) en alliage de magnésium, **caractérisée en ce qu'**elle comprend sur une surface (12, 22, 32) au moins une zone recouverte d'un revêtement de molybdène (2), ladite pièce (10, 20) ayant été rechargée par la mise en oeuvre du procédé selon l'une des revendications qui précèdent.

9. Boitier d'accessoires de turbomachine, comprenant un carter (10) et un couvercle (20), le carter et/ou le couvercle étant en alliage de magnésium et ayant été rechargé(s) selon le procédé selon l'une des revendications 1 et 7.

## Patentansprüche

1. Instandhaltungsverfahren eines Gussteils (10, 20) aus Magnesiumlegierung, wobei das Teil ein Kasten (10) eines Zubehörgehäuses einer Turbomaschine oder eine Kastenabdeckung (20) ist, umfassend mindestens eine zylindrische Fläche (12, 22, 32), die imstande ist, einen Rollenkäfig aufzunehmen, wobei das Verfahren **dadurch gekennzeichnet ist, dass** es einen Schritt (200) umfasst, der darin besteht, einen Molybdänauftrag (2) auf der Fläche (12, 22, 32) des Teils durch plasmatisches Sprühen vorzunehmen.

2. Instandhaltungsverfahren nach Anspruch 1, wobei das Teil (10, 20) einen aufgesetzten Ring (30) aus Magnesiumlegierung umfasst, wobei der Ring eine zylindrische Fläche (32) umfasst, die imstande ist, einen Rollenkäfig aufzunehmen, und die Molybdänmenge (2) auf eine Fläche (32) des Rings aufgebracht wird.

3. Instandhaltungsverfahren nach einem der Ansprüche 1 oder 2, umfassend ferner einen vorherigen Schritt (100) der Bearbeitung der Aufbringungsfläche (12, 22, 32), um eine Materialdicke zwischen 0 und 0,3 mm inklusive abzutragen.

4. Instandhaltungsverfahren nach einem der Ansprüche 1 bis 3, umfassend das Aufbringen einer Dicke zwischen 0,3 und 0,7 mm inklusive von Molybdän (2).

5. Instandhaltungsverfahren nach einem der Ansprüche 1 bis 4, umfassend ferner einen Bearbeitungsschritt (300) nach dem Aufbringen, um das überschüssige Molybdän von dem Teil zu entfernen.

6. Instandhaltungsverfahren nach einem der vorangehenden Ansprüche, wobei die Magnesiumlegierung das Magnesium ZRE1 oder das Magnesium GA6Z1 ist.

7. Instandhaltungsverfahren nach einem der vorangehenden Ansprüche, wobei das aufgebrachte Molybdän (2) zu mindestens 99 %, vorzugsweise zu mindestens 99,6 %, rein ist.

8. Gussteil (10, 20) aus Magnesiumlegierung, **dadurch gekennzeichnet, dass** es auf einer Fläche (12, 22, 32) mindestens eine mit einer Beschichtung aus Molybdän (2) bedeckte Zone umfasst, wobei das Teil (10, 20) durch Umsetzung des Verfahrens nach einem der vorangehenden Ansprüche beauflagt wird.

9. Zubehörgehäuses einer Turbomaschine, umfassend einen Kasten (10) und eine Abdeckung (20), wobei der Kasten und/oder die Abdeckung aus Magnesiumlegierung sind und gemäß dem Verfahren nach einem der Ansprüche 1 und 7 beauflagt wird/werden.

## Claims

1. A process for maintaining a cast part (10, 20) made of magnesium alloy, said part being a casing (10) of a turbomachine accessory gearbox or a casing cover (20), comprising at least one cylindrical surface (12, 22, 32) capable of receiving a bearing cage, the process being **characterized in that** it comprises a step (200) of providing a deposit of molybdenum (2) on the surface (12, 22, 32) of the part by plasma spraying.

2. The maintenance process according to claim 1, wherein the part (10, 20) comprises an attached ring (30) made of magnesium alloy, said ring comprising a cylindrical surface (32) capable of receiving a bearing cage, and the quantity of molybdenum (2) is deposited onto a surface (32) of said ring.

3. The maintenance process according to one of claims 1 or 2, further comprising a preliminary step (100) for machining the deposit surface (12, 22, 32) to remove a thickness of material comprised between 0 and 0.3 mm.

4. The maintenance process according to one of claims 1 to 3, comprising deposit of a thickness comprised between 0.3 and 0.7 mm of molybdenum (2).

5. The maintenance process according to one of claims 1 to 4, further comprising a machining step (300) subsequent to the deposit to remove the surplus of molybdenum from the part.

6. The maintenance process according to one of the preceding claims, wherein the magnesium alloy is ZRE1 magnesium or GA6Z1 magnesium.

7. The maintenance process according to one of the preceding claims, wherein the molybdenum (2) deposited is pure to at least 99%, preferably to at least 99.6%.

8. A cast part (10, 20) made of magnesium alloy, **characterized in that** it comprises on a surface (12, 22, 32) at least one area covered with a coating of molybdenum (2), said part (10, 20) having been replenished by executing the process according to one of the preceding claims.

9. A turbomachine accessory gearbox, comprising a casing (10) and a cover (20), the casing and/or the cover being made of magnesium alloy and having been replenished according to the process according to one of claims 1 and 7.
